# EUROPÄISCHE PATENTSCHRIFT

(11) **EP 0 348 352 B1**
(45) Veröffentlichungstag und Bekanntmachung des Hinweises auf die Patenterteilung: **11.01.1995**
(21) Anmeldenummer: 89810460.9
(22) Anmeldetag: 15.06.1989
(51) Int. Cl.: C08J 3/14, C08J 9/28, C08B 16/00

(54) **Verfahren zur Herstellung von feinteiligen und porösen Celluloseteilchen**
Process for preparing finely divided porous cellulose particles
Procédé pour préparer des particules poreuses finement divisées à base de cellulose

(30) Priorität: 24.06.1988 CH 2432/88
(43) Veröffentlichungstag der Anmeldung: 27.12.1989
(73) Patentinhaber: CIBA-GEIGY AG, 4002 Basel (CH)
(72) Erfinder: Francotte, Eric, Dr., CH-4412 Nuglar (CH); Baisch, Gabriele, D-7858 Weil-Friedlingen (DE)

(56) Entgegenhaltungen:
- EP-A- 0 025 639
- EP-A- 0 047 064
- EP-A- 0 316 270
- CHEMICAL ABSTRACTS, 108(18), abstract no. 151833y, Columbus, Ohio, US ; & JP-A-62 267339

## Beschreibung

Die Erfindung betrifft ein Verfahren nach der Suspensionsmethode zur Herstellung von feinteiliger Cellulose in Form von im wesentlichen sphärischen Teilchen, die eine hohe spezifische Oberfläche aufweisen.

Es ist bekannt, dass sich feinteilige Cellulose für verschiedenste Anwendungen als stationäre Phase in chromatographischen Verfahren eignet, z.B. in der Permeationschromatographie. Die Herstellung sphärischer Celluloseteilchen ist ebenfalls bekannt. Im allgemeinen werden Sprüh- oder Suspensionsverfahren verwendet.

J. Stamberg et al. beschreiben in Reactive Polymers, I, S. 145-147 (1983) ein Suspensionsverfahren, bei dem eine wässrige Lösung von Cellulosexanthogenat mit einem mit Wasser nicht mischbaren Lösungsmittel unter Rühren dispergiert und durch Erwärmen ein Sol-Gel-Uebergang erzielt wird, wobei gleichzeitig eine Abspaltung von Xanthogenatgruppen erfolgt.

In der EP-A-0 025 639 ist ein Verfahren zur Herstellung von sphärischen, porösen Celluloseteilchen beschrieben. Eine organische Lösung von Cellulosetriacetat, die einen längerkettigen Alkohol enthält, wird hierbei unter Rühren in einer wässrigen Phase suspendiert, die ein höhermolekulares Dispersionsmittel, z.B. Polyvinylalkohol oder Gelatine, enthält. Nach Entfernen des organischen Lösungsmittels werden die erhaltenen Cellulosetriacetatteilchen isoliert und gereinigt und daraufhin verseift. Eigene Untersuchungen ergaben, dass die nach diesem Verfahren erhaltenen Celluloseteilchen nur eine geringe spezifische Oberfläche und damit entsprechend geringe Affinität als Adsorbentien aufweisen.

Es wurde nun gefunden, dass man beim Suspensionsverfahren wesentlich höhere spezifische Oberflächen erzielen kann, wenn man mit aromatischen oder aromatisch-aliphatischen Carbonsäuren anstatt mit aliphatischen Carbonsäuren veresterte Cellulose verwendet, und als Dispersionsmittel ein anionisches Tensid anstelle eines höhermolekularen Dispersionsmittels verwendet.

Gegenstand der Erfindung ist ein Verfahren Zur Herstellung von feinteiliger und poröser Cellulose in Form von im wesentlichen sphärischen Teilchen mit einem mittleren Durchmesser von 1 bis 200 µm und einer spezifischen Oberfläche von mindestens 10 m²/g, bei dem man unter kräftigem Rühren eine Lösung eines Cellulose-Carbonsäure-Esters in einem organischen Lösungsmittel, das 1 bis 50 Vol-%, bezogen auf die Menge des Lösungsmittels, eines C₅-C₂₂-Alkanols enthält, langsam zu einer Lösung eines Dispersionsmittels in Wasser zugibt, unter Weiterrühren das organische Lösungsmittel entfernt, gegebenenfalls die festen Teilchen isoliert, und darauf unter heterogenen Bedingungen die Carbonsäuregruppen abspaltet, dadurch gekennzeichnet, dass die organische Lösung einen Celluloseester aromatischer oder aromatisch-aliphatischer Carbonsauren, und das Wasser ein anionisches Tensid enthalten.

Es hat sich als vorteilhaft erwiesen, dass man die festen Teilchen vor der Abspaltung der Carbonsäuregruppen isoliert und durch Auswaschen mit Nichtlösungsmitteln, wie z.B. Alkanolen und/oder Wasser reinigt.

Der mittlere Teilchendurchmesser beträgt bevorzugt 3 bis 100 µm, besonders 5 bis 80 µm. Der mittlere Teilchendurchmesser kann auch einen nur relativ engen Bereich umfassen. Solche Materialien können durch Fraktionierung nach üblichen Verfahren wie z.B. Sedimentation, Sieben oder Sichten hergestellt werden.

Die spezifische Oberfläche beträgt bevorzugt 10 bis 200 m²/g, besonders 20 bis 80 m²/g, insbesondere 30 bis 70 m²/g.

Die erfindungsgemäss hergestellte feinteilige Cellulose kann teilkristallinen sein. Die relative Kristallinität kann durch die Schmelzwärme der teilkristallinen Anteile der Cellulose angegeben werden, die zweckmässig durch kalorimetrische Messung bestimmt wird, z.B. Differential Scanning Calorimetry (DSC).

Die Carbonsäuren, von denen sich die Celluloseester ableiten, entsprechen bevorzugt der Formel R-X-COOH, worin X für eine direkte Bindung, C₁-C₄-Alkylen, C₂-C₄-Alkenylen, -Alkyliden oder -Alkinylen steht und R mono-, bi- oder tricyclisches, bevorzugt monocyclisches, C₆-C₁₄-Aryl oder Heteroaryl mit jeweils 5 oder 6 Ringatomen und einem bis drei, vorzugsweise einem oder Zwei Heteroatomen aus der Gruppe N, O oder S darstellt, wobei R unsubstituiert oder mit C₁-C₁₂-, vorzugsweise C₁-C₄-Alkyl, C₁-C₁₂-, vorzugsweise C₁-C₄-Alkoxy, C₁-C₁₂-, vorzugsweise C₁-C₄-Alkylthio, Phenyl, Phenoxy, Phenylthio, Benzyl, Benzyloxy, Benzylthio, Cyano, Halogen, C₁-C₈-Acyl, C₁-C₈-Acyloxy, Hydroxyl, C₁-C₁₂-Alkoxycarbonyl, Phenoxycarbonyl, Benzyloxycarbonyl, Nitro oder Di(C₁-C₆-alkyl)amino ein- oder mehrfach substituiert ist.
Bevorzugte Substituenten sind Methyl, Ethyl und Methoxy.

X enthält in der Bedeutung von Alkylen bevorzugt 1 bis 3 und besonders 1 oder 2 C-Atome. X in der Bedeutung von Alkenylen, Alkyliden oder Alkinylen enthält bevorzugt 2 oder 3 C-Atome. Das Alkylen, Alkenylen und Alkinylen kann linear oder verzweigt sein. Beispiele sind Methylen, Ethylen, Ethyliden, Ethenylen, Ethinylen, 1,2- oder 1,3-Propylen, 1,1- oder 2,2-Propyliden, 1,2- oder 1,3-Prop-1-enylen oder 1,2- oder 1,3-Prop-2-enylen, 1,3-Propinylen, 1,2-, 1,3-, 1,4- oder 2,3-Butylen, 1,1- oder 2,2-Butyliden, 1,2-, 1,3- oder 1,4-But-1-enylen, -But-2-enylen oder But-3-enylen, 1,2-, 1,3- oder 1,4-But-1-inylen, -But-2-inylen oder But-3-inylen. Besonders bevorzugt stellt X C₁-C₃-Alkylen, C₂-C₃-Alkyliden oder -Alkenylen oder eine direkte Bindung dar. Insbesondere bedeutet X eine direkte Bindung, Methylen, Ethylen oder Ethenylen. In einer bevorzugten Ausführungsform bedeutet X eine direkte Bindung oder 1,2-Ethenylen.

R in der Bedeutung von Aryl enthält bevorzugt 6 bis 10 C-Atome. Das Aryl kann mit Alkylen oder Alkenylen mit 2 bis 4 C-Atomen kondensiert sein. Beispiele für Aryl sind Phenyl, Naphthyl, Phenanthryl, Anthracyl, Indenyl, Indanyl, Fluorenyl, Fluorenonyl, Anthrachinonyl, Xanthonyl, Thioxanthonyl. Bevorzugt stellt R Naphthyl und besonders Phenyl dar.

R in der Bedeutung von Heteroaryl enthält bevorzugt 1 Heteroatom aus der Gruppe O, S und N. Das Heteroaryl kann mit Phenylen kondensiert sein. Beispiele für Heteroaryl sind Furyl, Thionyl, Pyrryl, Benzofuryl, Benzthionyl, Indyl, Pyridyl, Pyrimidyl, Chinolinyl und Isochinolinyl. Besonders bevorzugt ist Pyridyl.

Der Rest R kann ein- oder mehrfach, bevorzugt ein- bis dreifach, besonders ein- oder zweifach substituiert sein mit
C₁-C₁₂-, besonders C₁-C₄-Alkyl, -Alkoxy oder -Alkylthio, wie z.B. Methyl, Ethyl, n- oder i-Propyl, n-, i- oder t-Butyl, Pentyl, Hexyl, Heptyl, Octyl, Nonyl, Decyl, Undecyl, Dodecyl und entsprechende Alkoxy- oder Alkylthioreste; besonders bevorzugt sind Methyl, Ethyl, Methoxy und Ethoxy;
Phenyl, Phenoxy, Phenylthio, Benzyl, Benzyloxy und Benzylthio, bevorzugt Phenyl oder Benzyl; Hydroxyl, Cyano, Halogen, besonders F, Cl und Br; C₁-C₈-, bevorzugt C₁-C₄-Acyl oder -Acyloxy, z.B. Acetyl, Chloracetyl, Dichloracetyl, Trichloracetyl, Fluoracetyl, Trifluoracetyl, Propionyl, Butanoyl, Benzoyl und Phenylacetyl und entsprechende Acyloxyreste; C₁-C₁₂-, bevorzugt C₁-C₄-Alkoxycarbonyl, Phenoxy- und Benzyloxycarbonyl.

In einer bevorzugten Ausführungsform handelt es sich bei dem Substituenten um C₁-C₄-Alkyl, besonders Methyl oder Ethyl.

In einer bevorzugten Ausführungsform stellt X eine direkte Bindung, C₁-C₃-Alkylen oder C₂-C₃-Alkenylen dar und R ist unsubstituiertes oder substituiertes Phenyl, Naphthyl oder Pyridyl. Besonders bevorzugt ist X hierbei eine direkte Bindung, Methylen, Ethylen und Ethenylen.

In einer besonders bevorzugten Ausführungsform stellt R unsubstituiertes oder mit Methyl oder Ethyl substituiertes Phenyl dar und X ist eine direkte Bindung.

Die Celluloseester können nach bekannten Veresterungsverfahren hergestellt werden. Der Polymerisationsgrad kann zwischen 5 und 1000, bevorzugt 5 bis 500 und besonders 10 bis 50 liegen.

Der Veresterungsgrad des Celluloseesters kann 1 bis 3, bevorzugt 2 bis 3 und besonders 2,5 bis 3 sein. Der erzielbare Veresterungsgrad kann von der Reaktivität der verwendeten Carbonsäure abhängen.

Mit der Rührgeschwindigkeit, die z.B. 100 bis 1000 Umdrehungen/ Minute betragen kann, sowie der Menge Celluloseester im organischen Lösungsmittel und der Zugabegeschwindigkeit der organischen Lösung zur wässrigen Phase kann die Teilchengrösse beeinflusst werden.

Die spezifische Oberfläche kann durch die Reaktionsbedingungen beeinflusst werden, z.B. die Wahl des Lösungsmittels, des Alkanols und Tensids; die Reaktionsführung, z.B. Zugabe- und Rührgeschwindigkeit, Verdampfungsgeschwindigkeit; und die Mengenverhältnisse von Lösungsmittel, Wasser, Alkanol, Tensid und Celluloseester.

Die Menge Celluloseester im organischen Lösungsmittel kann z.B. 1 bis 20, bevorzugt 1 bis 12 Gew.-% betragen, bezogen auf das Lösungsmittel.

Es kann vorteilhaft sein, ein im wesentlichen wasserunlösliches Lösungsmittel zu verwenden.

Das organische Lösungsmittel weist zweckmässig einen niedrigeren Siedepunkt auf als Wasser. Geeignete Lösungsmittel sind z.B. aromatische Kohlenwasserstoffe, Halogenkohlenwasserstoffe, besonders Fluor- und/oder Chlorkohlenwasserstoffe, cyclische Ether, Carbonsäureester und Ketone. Beispiele sind Benzol, Toluol, Xylol, Methylenchlorid, Chloroform, Trichlorfluormethan, Chlorethan, Trifluortrichlorethan, Dichlortetrafluorethan, Aceton, Methylethylketon, Diethylketon, Cyclohexanon, Essigsäureethylester, Tetrahydrofuran und Dioxan oder Gemische von solchen Lösungsmitteln. Besonders bevorzugt sind Methylenchlorid und Tetrahydrofuran.

Es können auch Lösungsmittel verwendet werden, die höher sieden als Wasser, z.B. Toluol, Xylol, Chlorbenzol, Ethylenglykol- oder Diethylenglykolether. Das Lösungsmittel wird dann zusammen mit Wasser entfernt. Es ist hierbei zweckmässig, das entfernte Wasser wieder zu ersetzen, z.B. während der Destillation, oder eine entsprechend höhere Menge an Wasser vorzulegen.

Die organische Lösung enthält ein Alkanol vorzugsweise in einer Menge von 5 bis 40 Vol-%. Das Alkanol kann verzweigt und vorzugsweise linear sein. Es enthält bevorzugt 7 bis 16 und besonders 7 bis 12 C-Atome. Beispiele sind Pentanol, Hexanol, Heptanol, Octanol, Nonanol, Decanol, Undecanol, Dodecanol, Tridecanol, Tetradecanol, Hexadecanol, Octadecanol und Eicosanol. Die Alkanole sind vorzugsweise im wesentlichen in Wasser unlöslich. Insbesondere bevorzugt sind lineare C₇-C₁₀-Alkanole.

Das Volumenverhältnis der organischen Lösung zur wässrigen Phase beträgt bevorzugt 10:1 bis 1:10, besonders 5:1 bis 1:5, und insbesondere 3:1 bis 1:3.

Das anionische Tensid ist bevorzugt in einer Menge von 0,05 bis 10, vorzugsweise 0,1 bis 5 Gew.-% in der wässrigen Lösung enthalten, bezogen auf die Menge des Wassers.

Bei dem anionischen Tensid kann es sich z.B. um eine Säure, einen Halbester von Zwei- bis vierbasischen, besonders zwei- oder dreibasischen Säuren oder deren Salze handeln. Geeignete Salze sind z.B. Ammonium-, Alkali- (besonders Natrium- und Kalium-) oder Erdalkali(besonders Magnesium- und Calzium-)salze.

Die Säuren und Halbester enthalten z.B. lineare oder verzweigte C₃-C₂₀-Alkylgruppen oder mit 1 bis 3 C₁-C₂₀-Alkyl substituierte Phenylgruppen. Die Säuren können auch C₁-C₂₀-Perfluoralkylgruppen enthalten. Geeignete Säuren sind z.B. Mono- oder Dicarbonsäuren, Sulfonsäuren, Phosphonsäuren und Phosphinsäuren. Geeignete mehrbasische Säuren für Halbester sind z.B. Schwefelsäure, Phosphorsäure, phosphorige Säure, Malonsäure und Maleinsäure. Solche Tenside sind in grosser Anzahl im National Standard Reference Data System (NSRDS), Nat. Bur. Stand. (U.S.) 36, Seiten 24-32, U.S. Government Printing Office (1971) beschrieben. Bevorzugt sind C₈-C₁₆-Schwefelsäurehalbester, besonders Laurylsulfat.

Das Verfahren wird so durchgeführt, dass man die Lösung des Celluloseesters unter Rühren zur wässrigen Phase tropft und danach unter Weiterrühren das organische Lösungsmittel entfernt, zweckmässig durch Destillation unter Erwärmen bis zum Siedepunkt des Lösungsmittels und/oder im Vakuum. Darauf kann man die Suspension direkt zur Esterspaltung verwenden oder man isoliert die Teilchen, z.B. durch Dekantieren oder Filtration. Darauf können die Teilchen gereinigt werden, z.B. durch Auswaschen mit Wasser und einem hydrophilen Lösungsmittel, vorteilhaft mit einem C₁-C₄-Alkanol. Danach kann das Material noch getrocknet werden.

Die Abspaltung von Carbonsäuregruppen unter heterogenen Bedingungen kann nach an sich bekannten Verfahren erfolgen. In einer bevorzugten Ausführungsform verfährt man so, dass man die heterogene Abspaltung unter Verseifung in einer wässrig-alkoholischen oder alkoholischen Suspension der Cellulsoeesterteilchen mit einer Base durchführt. Als Nichtlösungsmittel sind z.B. Alkanole (Methanol, Ethanol, Propanol oder Butanol), Wasser oder Mischungen von Alkanolen und Wasser geeignet. Die Abspaltung kann durch Hydrolyse unter sauren oder bevorzugt basischen Bedingungen vorgenommen werden. Als Säuren sind insbesondere Mineralsäuren, wie z.B. HCl, HBr und H₂SO₄ geeignet. Als Basen kommen Amine oder vor allem Alkalicarbonate, -hydroxide und C₁-C₆-Alkoholate in Frage, z.B. Na₂CO₃, K₂CO₃, Li₂CO₃, LiOH, NaOH, KOH, NaOCH₃, NaOC₂H₅ oder LiOC₂H₅. In einer bevorzugten Ausführungsform verwendet man verdünnte, z.B. 5-20%ige NaOH und Ethanol als Nichtlösungsmittel. Die Abspaltung der Carbonsäuregruppen kann auch mit Metallhydriden vorgenommen werden, z.B. LiH, NaH, LiAlH₄ oder NaBH₄. Das Verfahren kann so durchgeführt werden, dass man die Celluloseesterteilchen im Nichtlösungsmittel gegebenenfalls unter Erwärmen aufquillt, die Suspension danach abkühlen lässt und darauf mit dem Hydrolysemittel versetzt. Man rührt die Suspension bevorzugt bei Raumtemperatur, isoliert die Celluloseteilchen z.B. durch Dekantieren oder Filtration und reinigt die Celluloseteilchen in üblicher Weise durch Auswaschen mit Wasser, Alkanolen und/oder Kohlenwasserstoffen. Danach wird das Material noch getrocknet.

Mit dem erfindungsgemässen Verfahren erhält man überraschend Cellulose in Form von im wesentlichen sphärischen Teilchen, die eine hohe Porosität (spezifische Oberfläche) aufweisen, was für chromatographische Verfahren und andere Anwendungen wichtig ist.

Die erfindungsgemäss hergestellten Celluloseteilchen können z.B. als Füllkörper; Träger für Filtrationen, Reinigungen oder Adsorptionen; Träger für die Fixierung anorganischer oder organischer Stoffe; Träger für Enzym- oder Proteinimmobilisierung oder -reinigung oder als Träger für pharmakologische Wirkstoffe verwendet werden (siehe zum Beispiel J. Stamberg et al., Bead Cellulose, Affinity Chromatography and related Techniques, S. 131-141, (1982), Eloevier Scient. Publ. Comp., Amsterdam.

Die nachfolgenden Beispiele erläutern die Erfindung näher. Prozente sind Gewichtsprozente, wenn nicht anders erwähnt.

Beispiel 1:
a) 36,6 g Cellulosetribenzoat werden in 1000 ml Methylenchlorid mit 124 ml Heptanol versetzt. Die erhaltene Lösung wird bei Raumtemperatur in eine bei 400 Upm gerührte 0,75 % Natriumlaurylsulfatlösung (2200 ml) getropft. Anschliessend wird bei derselben Rührgeschwindigkeit bei 40-42°C (Badtemperatur) das Methylenchlorid abgedampft. Der Rückstand wird abfiltriert und mit Wasser und Ethanol gewaschen. Das pulverige Produkt wird im Vakuumschrank bei 80°C (20 Std.) getrocknet. Ausbeute: 35,1 g (96 % der Theorie). Die kugelförmigen Teilchen mit einem Durchmesser von 10-30 µm können nach Bedarf durch Sieben oder Sedimentieren fraktioniert werden. Die physikalischen Eigenschaften des Produktes werden wie folgt bestimmt:
   Spezifische Oberfläche: 43,7 m²/g.
   Die spezifische Oberfläche (m²/g) wird nach der BET-Methode bestimmt.
   Kristallinität: 19,3 J/g.
   Die relative Kristallinität wird mit Hilfe von DSC (Differential Scanning Calorimetry; Mettler TA3000) aus der Schmelzwärme ΔH (J/g) bestimmt.
b) 10 g der Tribenzoylcellulosekugeln werden in 200 ml Ethanol (75 % in Wasser) 30 Min. bei 50-60°C gequollen. Die Suspension wird abgekühlt und mit 150 ml einer 10%igen wässrigen NaOH Lösung versetzt. Die Lösung wird 20 Stunden bei Raumtemperatur gerührt, abfiltriert und die Cellulosekugeln werden mit Wasser, Ethanol und anschliessend mit Hexan gespült. Das Produkt wird im Vakuumtrockenschrank bei 50°C getrocknet (Analyse; berechnet: C 44,45 %, H 6,22 %, O 49,34 %; gefunden: C 44,64 %, H 6,37 %, O 49,19 %; Spezif. Oberfläche: 55 m²/g; Durchmesser: 10-20 µm).

Beispiel 2: 5 g der Tribenzoylcellulosekugeln gemäss Beispiel 1a werden 1 Std. bei 50°C in einer Natrium-Methylat Lösung (0,87 g Natrium/50 ml Methanol) gerührt. Die Suspension wird abfiltriert und mit Wasser, Ethanol und anschliessend Hexan gespült. Das Produkt wird bei 50°C im Vakuum getrocknet. (Analyse; berechnet: C 44,45 %, H 6,22 %, O 49,34 %; gefunden: C 43,30 %, H 6,50 %, O 49,43 %; Spezif. Oberfläche: 14,5 m²/g; Durchmesser: 5-15 µm).

Beispiel 3:

a) Analog zum Beispiel 1a) werden 10 g Celllulosetri(paramethylbenzoat) in 300 ml Methylenchlorid mit 50 ml Heptanol und 240 ml 0,7%-iger Natriumlaurylsulfat-Lösung behandelt und isoliert (spez. Oberfläche: 77,1 m²/g; ΔH: 10,6 J/g; Durchmesser: 3-10 µm).
b) Analog zum Beispiel 1b) werden 5 g der para-Methyl-Benzoylcellulosekugeln mit 50 ml Ethanol (75 % in Wasser) und 50 ml 10%iger Natronlauge 20 Std. bei Raumtemperatur gerührt und anschliessend isoliert. (Analyse; berechnet: C 44,45 %, H 6,22 %, O 49,34 %; gefunden: C 44,29 %, H 5,98 %, O 48,86 %; Spezif. Oberfläche: 58,1 m²/g; Durchmesser: 2-5 µm).

## Patentansprüche

1. Verfahren zur Herstellung von feinteiliger und poröser Cellulose in Form von im wesentlichen sphärischen Teilchen mit einem mittleren Durchmesser von 1 bis 200 µm und einer spezifischen Oberfläche von mindestens 10 m²/g, bei dem man unter kräftigem Rühren eine Lösung eines Cellulose-Carbonsäure-Esters in einem organischen Lösungsmittel, das 1 bis 50 Vol-%, bezogen auf die Menge des Lösungsmittels, eines C₅-C₂₂-Alkanols enthält, langsam zu einer Lösung eines Dispersionsmittels in Wasser zugibt, unter Weiterrühren das organische Lösungsmittel entfernt, gegebenenfalls die festen Teilchen isoliert, und darauf unter heterogenen Bedingungen die Carbonsäuregruppen abspaltet, dadurch gekennzeichnet, dass die organische Lösung einen Celluloseester aromatischer oder aromatisch-aliphatischer Carbonsäuren, und das Wasser ein anionisches Tensid enthalten.

2. Verfahren gemäss Anspruch 1, dadurch gekennzeichnet, dass man die festen Teilchen vor der Abspaltung der Carbonsäuregruppen auswäscht und trocknet.

3. Verfahren gemäss Anspruch 1, dadurch gekennzeichnet, dass das organische Lösungsmittel einen niedrigeren Siedepunkt als Wasser aufweist.

4. Verfahren gemäss Anspruch 1, dadurch gekennzeichnet, dass das Lösungsmittel ein aromatischer Kohlenwasserstoff, ein Halogenkohlenwasserstoff, ein cyclischer Ether, ein Carbonsäureester oder ein Keton ist.

5. Verfahren gemäss Anspruch 1, dadurch gekennzeichnet, dass das Alkanol 7 bis 16 C-Atome enthält.

6. Verfahren gemäss Anspruch 1, dadurch gekennzeichnet, dass das Alkanol 7 bis 12 C-Atome enthält.

7. Verfahren gemäss Anspruch 1, dadurch gekennzeichnet, dass das Alkanol in einer Menge von 5 bis 40 Vol-% enthalten ist, bezogen auf die Menge des organischen Lösungsmittels.

8. Verfahren gemäss Anspruch 1, dadurch gekennzeichnet, dass es sich bei dem Tensid um eine Säure, einen Halbester von zwei- bis vier basischen Säuren oder deren Salze handelt.

9. Verfahren gemäss Anspruch 1, dadurch gekennzeichnet, dass es sich bei dem Tensid um Laurylsulfat handelt.

10. Verfahren gemäss Anspruch 1, dadurch gekennzeichnet, dass das Volumenverhältnis der organischen Lösung zur wässrigen Phase von 10:1 bis 1:10 beträgt.

11. Verfahren gemäss Anspruch 1, dadurch gekennzeichnet, dass der mittlere Durchmesser 3 bis 100 µm beträgt.

12. Verfahren gemäss Anspruch 1, dadurch gekennzeichnet, dass der mittlere Durchmesser 5 bis 80 µm beträgt.

13. Verfahren gemäss Anspruch 1, dadurch gekennzeichnet, dass die spezifische Oberfläche 10 bis 200 m²/g beträgt.

14. Verfahren gemäss Anspruch 1, dadurch gekennzeichnet, dass die spezifische Oberfläche 20 bis 80 m² /g beträgt.

15. Verfahren gemäss Anspruch 1, dadurch gekennzeichnet, dass die Cellulose mit Carbonsäuren der Formel
R-X-COOH
verestert ist, worin X für eine direkte Bindung, C₁-C₄-Alkylen, C₂-C₄-Alkenylen, -Alkyliden oder -Alkinylen steht und R mono-, bi- oder tricyclisches C₆-C₁₄-Aryl oder Heteroaryl mit jeweils 5 oder 6 Ringatomen und einem bis drei Heteroatomen aus der Gruppe N, O oder S darstellt, wobei R unsubstituiert oder mit C₁-C₁₂-Alkyl, C₁-C₁₂-Alkoxy, C₁-C₁₂-Alkylthio, Phenyl, Phenoxy, Phenylthio, Benzyl, Benzyloxy, Benzylthio, Cyano, Halogen, C₁-C₈-Acyl, C₁-C₈-Acyloxy, Hydroxyl, C₁-C₁₂-Alkoxycarbonyl, Phenoxycarbonyl, Benzyloxycarbonyl, Nitro oder Di(C₁-C₆-alkyl)amino ein- oder mehrfach substituiert ist.

16. Verfahren gemäss Anspruch 15, dadurch gekennzeichnet, dass X für eine direkte Bindung, C₁-C₃-Alkylen oder C₂-C₃-Alkenylen steht und R unsubstituiertes oder substituiertes Phenyl, Naphthyl oder Pyridyl ist.

17. Verfahren gemäss Anspruch 15, dadurch gekennzeichnet, dass R unsubstituiertes oder substituiertes Phenyl, Naphthyl oder Pyridyl und X eine direkte Bindung, Methylen, Ethylen oder Ethenylen sind.

18. Verfahren gemäss Anspruch 15, dadurch gekennzeichnet, dass R unsubstituiertes oder mit Methyl oder Ethyl substituiertes Phenyl und X eine direkte Bindung darstellen.

19. Verfahren gemäss Anspruch 1, dadurch gekennzeichnet, dass man die heterogene Abspaltung unter Verseifung in einer wässrig-alkoholischen oder alkoholischen Suspension der Cellulsoeesterteilchen mit einer Base durchführt.

## Claims

1. A process for the preparation of finely divided porous cellulose in the form of essentially spherical particles having an average diameter of 1 to 200 µm and a specific surface area of at least 10 m²/g, in which a solution of a cellulose carboxylic ester in an organic solvent containing 1 to 50 % by volume, based on the amount of solvent, of a C₅-C₂₂alkanol is slowly added, with vigorous stirring, to a solution of a dispersing agent in water, the organic solvent is removed, while stirring is continued, the solid particles are isolated if desired and the carboxylic acid groups are then split off under heterogeneous conditions, wherein the organic solution contains a cellulose ester of aromatic or aromatic-aliphatic carboxylic acids and the water contains an anionic surfactant.

2. The process according to claim 1, wherein the solid particles are washed out and dried before the carboxylic acid groups are split off.

3. The process according to claim 1, wherein the organic solvent has a lower boiling point than water.

4. The process according to claim 1, wherein the solvent is an aromatic hydrocarbon, a halogenated hydrocarbon, a cyclic ether, a carboxylic acid ester or a ketone.

5. The process according to claim 1, wherein the alkanol contains 7 to 16 C atoms.

6. The process according to claim 1, wherein the alkanol contains 7 to 12 C atoms.

7. The process according to claim 1, wherein the alkanol is present in an amount of 5 to 40 % by volume, based on the amount of organic solvent.

8. The process according to claim 1, wherein the surfactant is an acid, a half-ester of a di-, tri- or tetrabasic acid or a salt thereof.

9. The process according to claim 1, wherein the surfactant is lauryl sulfate.

10. The process according to claim 1, wherein the volume ratio of the organic solution to the aqueous phase is 10:1 to 1:10.

11. The process according to claim 1, wherein the average diameter is 3 to 100 µm.

12. The process according to claim 1, wherein the average diameter is 5 to 80 µm.

13. The process according to claim 1, wherein the specific surface area is 10 to 200 m²/g.

14. The process according to claim 1, wherein the specific surface area is 20 to 80 m²/g.

15. The process according to claim 1, wherein the cellulose is esterified with a carboxylic acid of the formula
R-X-COOH
in which X is a direct bond, C₁-C₄alkylene or C₂-C₄alkenylene, C₂-C₄alkylidene or C₂-C₄alkynylene and R is mono-, bi- or tricyclic C₆-C₁₄aryl or heteroaryl having in each case 5 or 6 ring atoms and one to three hetero atoms from the group consisting of N, O and S, R being unsubstituted or substituted by one or more substituents from the group consisting of C₁-C₁₂alkyl, C₁-C₁₂alkoxy, C₁-C₁₂alkylthio, phenyl, phenoxy, phenylthio, benzyl, benzyloxy, benzylthio, cyano, halogen, C₁-C₈acyl, C₁-C₈acyloxy, hydroxyl, C₁-C₁₂alkoxycarbonyl, phenoxycarbonyl, benzyloxycarbonyl, nitro or di(C₁-C₆alkyl)amino.

16. The process according to claim 15, wherein X is a direct bond, C₁-C₃alkylene or C₂-C₃alkenylene and R is unsubstituted or substituted phenyl, naphthyl or pyridyl.

17. The process according to claim 15, wherein R is unsubstituted or substituted phenyl, naphthyl or pyridyl and X is a direct bond, methylene, ethylene or ethenylene.

18. The process according to claim 15, wherein R is phenyl which is unsubstituted or substituted by methyl or ethyl and X is a direct bond.

19. The process according to claim 1, wherein the heterogeneous splitting off is carried out under hydrolysis in an aqueous-alcoholic or alcoholic suspension of the cellulose ester particles, using a base.

## Revendications

1. Procédé de préparation de cellulose finement divisée et poreuse sous forme de particules essentiellement sphériques ayant un diamètre moyen de 1 à 200 µm et une surface spécifique d'au moins 10 m²/g, procédé dans lequel on ajoute sous forte agitation une solution d'un ester de cellulose et d'un acide carboxylique dans un solvant organique contenant de 1 à 50 % en volume, par rapport à la quantité du solvant, d'un alcanol en C₅-C₂₂, lentement, à une solution aqueuse d'un agent dispersant, tout en poursuivant l'agitation on élimine le solvant organique, éventuellement on isole les particules solides et on élimine ensuite les groupes carboxyliques dans des conditions hétérogènes, procédé caractérisé en ce que la solution organique contient un ester de cellulose et d'un acide carboxylique aromatique ou aromatique-aliphatique, et l'eau un agent surfactif anionique.

2. Procédé selon la revendication 1, caractérisé en ce qu'on lave et sèche les particules solides avant d'éliminer les groupes carboxyliques.

3. Procédé selon la revendication 1, caractérisé en ce que le solvant organique a un point d'ébullition inférieur à celui de l'eau.

4. Procédé selon la revendication 1, caractérisé en ce que le solvant est un hydrocarbure aromatique, un hydrocarbure halogéné, un éther cyclique, un ester d'acide carboxylique ou une cétone.

5. Procédé selon la revendication 1, caractérisé en ce que l'alcanol a de 7 à 16 atomes de carbone.

6. Procédé selon la revendication 1, caractérisé en ce que l'alcanol a de 7 à 12 atomes de carbone.

7. Procédé selon la revendication 1, caractérisé en ce que l'alcanol est contenu en une proportion de 5 à 40 % en volume par rapport à la quantité du solvant organique.

8. Procédé selon la revendication 1, caractérisé en ce que l'agent surfactif est un acide, un semi-ester d'un diacide, d'un triacide ou d'un tétracide ou leurs sels.

9. Procédé selon la revendication 1, caractérisé en ce que le surfactif est un laurylsulfate.

10. Procédé selon la revendication 1, caractérisé en ce que le rapport volumique de la solution organique à la phase aqueuse est de 10:1 à 1:10.

11. Procédé selon la revendication 1, caractérisé en ce que le diamètre moyen est de 3 à 100 µm.

12. Procédé selon la revendication 1, caractérisé en ce que le diamètre moyen est de 5 à 80 µm.

13. Procédé selon la revendication 1, caractérisé en ce la surface spécifique est de 10 à 200 m²/g.

14. Procédé selon la revendication 1, caractérisé en ce que la surface spécifique est de 20 à 80 m²/g.

15. Procédé selon la revendication 1, caractérisé en ce que la cellulose est estérifiée avec des acides carboxyliques de formule :
R-X-COOH
x désignant une liaison directe, un alkylène en C₁-C₄, un alcénylène, un alkylidène ou un alcynylène en C₂-C₄ et R un aryle en C₆-C₁₄ monocyclique, bicyclique ou tricyclique, ou un hétéroaryle avec chaque fois 5 ou 6 atomes par cycle et de un à trois hétéroatomes pris parmi l'azote, l'oxygène et le soufre, R étant non substitué ou substitué une ou plusieurs fois par des substituants pris parmi les alkyles en C₁-C₁₂ les alcoxy en C₁-C₁₂, les alkylthio en C₁-C₁₂, les groupes phényle, phénoxy, phénylthio, benzyle, benzyloxy, benzylthio, cyano, les halogènes, les acyles en C₁-C₈, les acyloxy en C₁-C₈, le groupe hydroxyle, les alcoxycarbonyles en C₁- C₁₂, les groupes phénoxycarbonyle, benzyloxycarbonyle, nitro et les groupes di(alkyl en C₁-C₆)amino.

16. Procédé selon la revendication 15, caractérisé en ce que X représente une liaison directe, un alkylène en C₁-C₃ ou un alcénylène en C₂-C₃ et R est un groupe phényle, naphtyle ou pyridyle non-substitué ou substitué.

17. Procédé selon la revendication 15, caractérisé en ce que R est un groupe phényle, naphtyle ou pyridyle non-substitué ou substitué et X une liaison directe ou bien un groupe méthylène, éthylène ou éthénylène.

18. Procédé selon la revendication 15, caractérisé en ce que R est un groupe phényle non-substitué ou méthyl- ou éthyl-substitué et X représente une liaison directe.

19. Procédé selon la revendication 1, caractérisé en ce que l'on effectue l'élimination hétérogène avec saponification au moyen d' une base dans une suspension hydro-alcoolique ou alcoolique des particules de l'ester cellulosique.
